# EUROPEAN PATENT SPECIFICATION

(11) **EP 3 389 023 B1**
(45) Date of publication and mention of the grant of the patent: **08.12.2021**
(21) Application number: 16873106.5
(22) Date of filing: 09.12.2016
(51) Int. Cl.: G08B 27/00, G08G 1/16, G08B 7/06, A42B 3/04

(54) **DEVICE FOR PRESENTING AN ONOMATOPOEIA PERTAINING TO RESULTS OF EVALUATING A SURROUNDING ENVIRONMENT AND METHOD FOR PRESENTING AN ONOMATOPOEIA**
VORRICHTUNG ZUR PRÄSENTATION EINER ONOMATOPÖIE BEZÜGLICH DER ERGEBNISSE DER EVALUIERUNG EINER UMGEBUNG UND VERFAHREN ZUR PRÄSENTATION EINER ONOMATOPÖIE
DISPOSITIF DE PRÉSENTATION D'UNE ONOMATOPÉE CORRESPONDANT À DES RÉSULTATS D'ÉVALUATION D'UN ENVIRONNEMENT ALENTOUR ET PROCÉDÉ DE PRÉSENTATION D'UNE ONOMATOPÉE

(30) Priority: 11.12.2015 JP 2015242385
(43) Date of publication of application: 17.10.2018
(73) Proprietor: Yamaha Hatsudoki Kabushiki Kaisha, Iwata-shi, Shizuoka 438-8501 (JP)
(72) Inventor: INUI, Shogo, Iwata-shi Shizuoka 438-8501 (JP); SUEGAMI, Takashi, Iwata-shi Shizuoka 438-8501 (JP); DAIMOTO, Hiroshi, Iwata-shi Shizuoka 438-8501 (JP); ICHII, Kyonosuke, Iwata-shi Shizuoka 438-8501 (JP)
(74) Representative: Zimmermann, Tankred Klaus
(86) International application number: PCT/JP2016/086696
(87) International publication number: WO 2017/099213

(56) References cited:
- WO-A1-2013/190637
- WO-A1-2014/039805
- JP-A- H0 971 198
- JP-A- 2007 334 149
- JP-A- 2010 231 337
- JP-A- 2013 063 718
- JP-A- 2013 063 718
- JP-A- 2015 136 953
- US-A1- 2005 154 505
- US-A1- 2013 142 393
- US-A1- 2015 134 240

## Description

### TECHNICAL FIELD

The present teaching relates to a technique for presenting an evaluation result of a surrounding environment to a user. Specifically, the teaching relates to a technique for presenting information about an external environment to such a user as an operator of a vehicle who observes an external state.

### BACKGROUND ART

A driver who is driving an automobile grasps a state of his/her surrounding environment to make various determinations, from visual images which come through the windshield glass. If he/she sees a pedestrian walking on a crosswalk, he/she determines on whether or not he/she should make a stop. If he/she sees an automobile approaching an intersection, he/she determines on whether or not he/she should slow down. The driver also makes various determinations from a sound of his/her vehicle he/she hears or a sound from outside of the vehicle.

The same applies to a rider who is riding on a motorcycle. During the operation of a motorcycle, the rider pays attention to images and sounds he/she sees and hears, and grasps a state of his/her surrounding environment. The rider makes control operations of the motorcycle in accordance with the state he/she has grasped. As described, when a person is operating a vehicle, he/she observes the states of his/her surrounding environment, and takes actions in accordance with the state of the surrounding environment.

JP 2015-3707 A relates to a head-up display for projecting images on a windshield glass of an automobile by projecting lights onto the windshield glass. The head-up display may display such information including vehicle information which indicates a state of the vehicle such as vehicle traveling speed, signal indicator state and so on; and foreground information which indicates a state of the path on which the vehicle is traveling. According to JP 2015-3707 A, the vehicle information and the foreground information are displayed in different modes from each other in the head-up display to help the driver's recognition. For example, if a bicycle moving ahead of the automobile is recognized as foreground information, an indicator is displayed in the head-up display to report the driver that a bicycle has appeared.

US 2015/134240 A1 describes an imitation sound generation system that accurately informs a user of a road environment corresponding to a current location, by an imitation sound. A navigation apparatus, which serves as an imitation sound generation system, includes a map data storage apparatus that stores road network data including data regarding links each representing each road in a road network, a vehicle information acquiring unit that acquires a current location, and a travelling road determining unit that specifies a link to which the current location belongs. The map data storage apparatus stores a plurality of pieces of imitation sound data each being associated with each link. A controller determines a piece of imitation sound data that is associated with the link to which the current location belongs, on the basis of the plurality of pieces of imitation sound data.

### SUMMARY OF INVENTION

### TECHNICAL PROBLEM

The device in JP 2015-3707 A is capable of directing the driver's consciousness to appearance of automobiles and bicycles on the path by showing indicators on the windshield glass. In other words, it is possible to make the driver aware of appearance of automobiles and bicycles.

The driver may be warned by the indicators and may be able to pay attention to the appearance of the automobiles and bicycles. However, any specific analyses of the state must be performed by the driver himself/herself. The warned driver grasps a state of the automobiles and bicycles based on an actual image which he/she recognizes through the windshield glass. In other words, the driver makes determinations about the state of the path based on images of the automobiles and bicycles which are actually captured in his/her sight of view.

An object of the present teaching is to provide a technique for conveying information about an external environment so that a person who receives the information can understand it as easily as possible.

This object is achieved by a device and a method for presenting an onomatopoeia pertaining to results of evaluating a surrounding environment as defined in the independent claims.

### SOLUTION TO PROBLEM and ADVANTAGEOUS EFFECTS OF INVENTION

The invention is defined in the independent claims.

### BRIEF DESCRIPTION OF DRAWINGS

Fig. 1 is a drawing which shows a definition of onomatopoeia in the present embodiment.
Fig. 2 shows a motorcycle and various sensors according to the present embodiment
Fig. 3 is a block diagram which shows an ambient environment information presenting apparatus according to the present embodiment.
Fig. 4 shows loudspeakers and a display mounted on a helmet.
Fig. 5 shows an example of data stored in a measurement information database.
Fig. 6 shows an example of data stored in an onomatopoeia database.
Fig. 7 shows an example of tables stored in a judgment criteria database according to an example not being part of the the invention.
Fig. 8 shows an example according to the invention of tables stored in a judgment criteria database.
Fig. 9 shows an example of tables stored in a judgment criteria database according to an example not being part of the the invention.
Fig. 10 shows an example according to the invention of tables stored in a judgment criteria database.
Fig. 11 shows an example in which multi-graded evaluation results are obtained for an evaluation item and each of the results is assigned with an onomatopoeia.
Fig. 12 shows an example in which multi-graded evaluation results are obtained for an evaluation item and each of the results is assigned with an onomatopoeia.
Fig. 13 shows an example in which multi-graded evaluation results are obtained for an evaluation item and each of the results is assigned with an onomatopoeia.
Fig. 14 shows an example in which there are evaluation results regarding a plurality of evaluation items and each of the results is assigned with an onomatopoeia.
Fig. 15 shows an example in which there are evaluation results regarding a plurality of evaluation items and each of the results is assigned with an onomatopoeia.
Fig. 16 is a flow chart which shows processing contents of the ambient environment information presenting apparatus.
Fig. 17 is a flow chart which shows processing contents of the ambient environment information presenting apparatus.
Fig. 18 is a flow chart which shows processing contents of an evaluation result obtaining process.
Fig 19 shows a position where an onomatopoeia is displayed.
Fig. 20 shows an example in which an onomatopoeia is displayed near an observation object.
Fig. 21 shows a configuration example of the ambient environment information presenting apparatus.
Fig. 22 shows a configuration example of the ambient environment information presenting apparatus.

### DESCRIPTION OF EMBODIMENTS

A driver who is driving an automobile or a rider who is operating a motorcycle grasps a state of his/her surrounding environment to make various determinations, from visual images which come into his/her field of vision. The same applies to persons who are not on a vehicle, in other words, pedestrians who are walking or running. People are always grasping a state of their ambient environment and take actions according to the ambient environment.

The inventors of the present teaching noticed that events in the ambient environment include those which are easy for the observer to determine a state thereof, and those which are not easy for the observer to determine a state thereof. If an observation object is something easy for the observer to determine what it is, one should simply make the observer aware of the observation object, and then most of the purpose has already been achieved. The observer who has been made aware should simply look at the observation object to grasp a state thereof. However, there are cases in which the observer cannot easily determine what state the observation object is in or how the observation object is moving.

So, the inventors considered providing a system for making an observer aware of a state where it can be difficult for the observer to make determinations from what he/she sees, or a state from which the observer may be able to make some forecast but where it will be impossible to make a correct determination from what he/she sees.

For example, it is difficult for a motorcycle rider to grasp a state of a road surface only from what he/she sees. In such a case, it may be convenient if the observer's visual information is not the only source but if sensors are utilized to evaluate an environmental state and an evaluation result is presented to the observer. Further, it may be more convenient if it is possible, not only to indicate that a bicycle is coming into the course of travel, but also to present the observer with such information as how fast the bicycle is moving, as part of the evaluation result through the use of sensors.

When the observer is not hustling in a time-wise or task-wise manner, there is little hurdle for presenting the observer with information. However, under a state, e.g., when the observer is operating a motorcycle, it is not easy for him/her to spend a long time to get information. In such a state, it is difficult to provide the observer with a large amount of information or detailed information. In order to provide the observer with a large amount of information or detailed information, a relatively long sentence, or numbers/values as part of the information is required.

Further, means for presenting information to a motorcycle rider is limited when compared to an automobile driver. One reason for this is that a motorcycle rider wears a helmet. Even if there is a monitor mounted near a motorcycle handlebar, it is difficult for the rider with a helmet to see the monitor.

In comparison with an automobile driver, a motorcycle rider has to make a wider varieties of control operations and the operations must be made more frequently. Further, a motorcycle rider must often perform more than one operations simultaneously. Therefore, it is difficult to let the rider know of information by means of an image even if the motorcycle has a monitor screen mounted thereon. The inventors of the present teaching came to an idea of utilizing onomatopoeia as a means for presenting an ambient environmental state to observers who receive the information and are under a hustling state in a time-wise or task-wise sense.

Use of onomatopoeia in providing information offers the following advantages: first, evaluation contents relating to a plurality of evaluation items can be expressed in one onomatopoeia; second, an evaluation score in a multi-graded evaluation system regarding one evaluation item can be expressed in onomatopoeia.

The inventors of the present teaching came to an idea that use of onomatopoeia is effective in systems which provide an observer with a state information of a surrounding environment grasped in a plurality of evaluation items or state information of a surrounding environment rated in a multi-graded way in one evaluation item. The inventors came to the idea that by utilizing an ambient environment information presenting system which makes use of onomatopoeia, it becomes possible to provide an observer with information about a surrounding environment in a concise manner with a short word.

The inventors of the present teaching came to an idea that by making an ambient environment information presenting system utilizing a device for presenting an onomatopoeia pertaining to results of evaluating a surrounding environment described as an example, it becomes possible to provide information about a surrounding environment to a user while the user is engaged in an action. Here, "to provide information about a surrounding environment to a user while the user is engaged in an action" means to provide a user who is engaged in an action, with information the user would want to know about a surrounding environment or information about a surrounding environment relevant to the action, while the user is performing the action. In other words, it means to provide a user, who is making an action in a surrounding environment, with information regarding the surrounding environment of the user. For example, if the user is riding a motorcycle, information about the surrounding environment is provided while the user is still in operation of the motorcycle. For another example, if the user is running, information about the surrounding environment is provided while the user is stiii running.

Hereinafter, description will be made using an ambient environment information presenting apparatus as one mode of embodiment of the device for presenting an onomatopoeia pertaining to results of evaluating a surrounding environment according to the present teaching.

In the following mode of embodiment, "measurement information inputting section" corresponds to "measurement result inputting section" according to the present teaching. In the following mode of embodiment, "onomatopoeia obtaining section" corresponds to "onomatopoeia data obtaining section" according to the present teaching. In the following mode of embodiment, "outputting section" corresponds to "onomatopoeia outputting section" according to the present teaching. In the following mode of embodiment, "loudspeaker" and "display" are examples of "notification device" according to the present teaching.

Hereinafter, description will be made for an embodiment of the device for presenting an onomatopoeia pertaining to results of evaluating a surrounding environment according to the present teaching, using an ambient environment information presenting apparatus mounted on a motorcycle as one example.

### [1. Overview of the Ambient Environment Information Presenting Apparatus]

The ambient environment information presenting apparatus according to the present embodiment is mounted on a motorcycle. The rider of the motorcycle grasps a state of his/her ambient environment, and makes operations accordingly to the state which he/she grasps. The ambient environment information presenting apparatus evaluates an ambient environment and obtains an onomatopoeia which corresponds to the evaluation contents. The motorcycle provides the rider with the onomatopoeia which is obtained by the ambient environment information presenting apparatus, as an evaluation result of the surrounding environment The rider obtains information which indicates the evaluation result of the surrounding environment in an expression using onomatopoeia, while operating the motorcycle and continuing his/her riding.

### [2. Onomatopoeia]

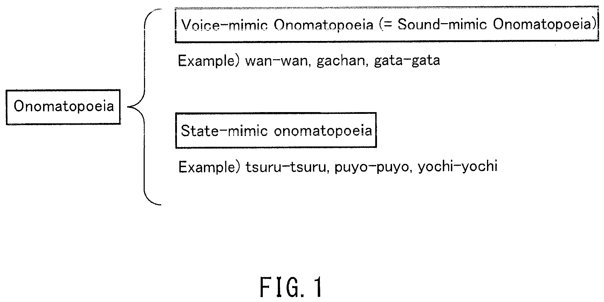

Definitions of terms to be used in the present Description will be explained with reference to Fig. 1. A voice-mimic onomatopoeia (or sound-mimic onomatopoeia) is a mimic word of a sound made by an animal or a noise from an object, etc. Examples of the voice-mimic onomatopoeia include: "wan-wan" ("wan-wan" in the Japanese sound, and "bow-wow" in the English sound, voice-mimic onomatopoeias expressing a bark of a dog); "gacyan" ("gacyan" in the Japanese sound, and "clash" in the English sound, voice-mimic onomatopoeias expressing a noise when a piece of pottery, for example, is broken); "gata-gata" (gata-gata" in the Japanese sound, and "bonk" in the English sound, voice-mimic onomatopoeias expressing a noise from a rickety desk whose legs are not equal in length).

A state-mimic onomatopoeia is a mimic word expressing a state of an object or an action of a person, etc. Examples of the state-mimic onomatopoeia include: "tsuru-tsuru" ("tsuru-tsuru" in the Japanese sound, a state-mimic onomatopoeia expressing a smooth state of a surface); "puyo-puyo" ("puyo-puyo" in the Japanese sound, a state-mimic onomatopoeia expressing a soft and elastic state); and "yochi-yochi" ("yochi-yochi" in the Japanese sound, a state-mimic onomatopoeia expressing a state of a baby slowly crawling forward).

Other examples of the state-mimic onomatopoeia include: "soro-soro" ("soro-soro" in the Japanese sound and "slo-slo-slo" in the English sound, state-mimic onomatopoeias expressing a state where a speed/action is slow); "viewn" ("viewn" in the Japanese sound and "zooooom" in the English sound, state-mimic onomatopoeias expressing a state that a speed/action is fast); "cueeen" ("cueeen" in the Japanese sound and "zoooooooom" in the English sound, state-mimic onomatopoeias expressing a state of moving fast and a bracing feeling as well); and "fla-fla" ("fla-fla" in the Japanese sound and "diz-diz-diz" in the English sound, state-mimic onomatopoeias expressing a state of moving in a staggering manner). The term onomatopoeia covers both voice-mimic onomatopoeia and state-mimic onomatopoeia.

Onomatopoeia is used very frequently in Japanese but onomatopoeia is used also in English. For example, "doub-doub" in Japanese ("doub-doub" in the Japanese sound, a state-mimic onomatopoeia expressing a state where the size of a garment, for example, is too big) has an equivalent English onomatopoeia of "baggy", etc.; and "beee!" in Japanese ("beee!" in the Japanese sound, a voice-mimic onomatopoeia expressing a sound from a buzzer and the like) has an equivalent English onomatopoeia of "beep", etc. Also, "boink !!", "boing !!", "whoosh !!", etc. are used as onomatopoeias expressing states of jumping, hopping, leaping.

### [3. Overall Configuration of the Motorcycle]

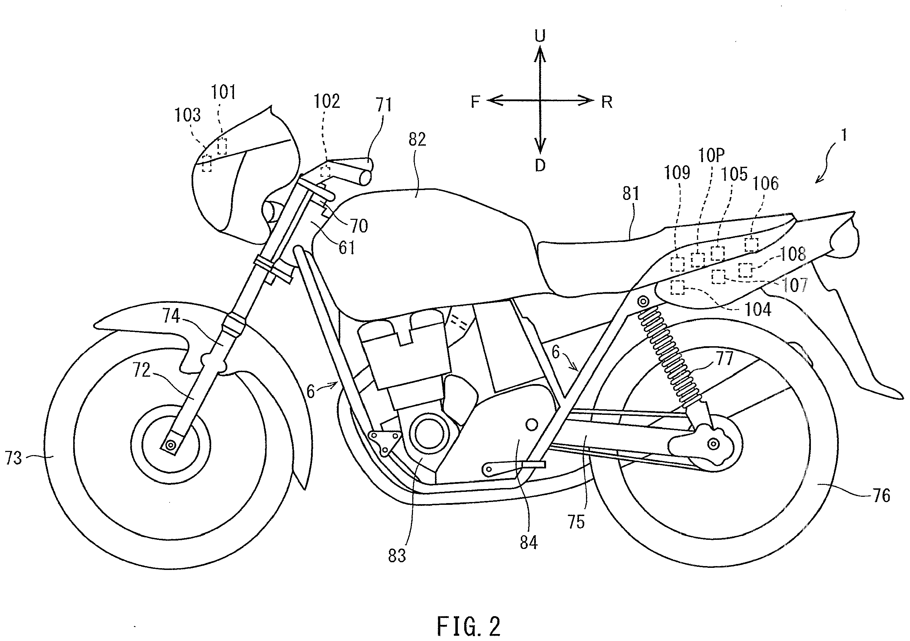

The description will now cover a configuration of a motorcycle 1 according to the present embodiment, with reference to Fig. 2. In the present embodiment, the motorcycle 1 is provided by a naked-type motorcycle as shown in Fig. 2. However, the ambient environment information presenting apparatus according to the present embodiment is applicable to any type of motorcycles including racer type, American type, etc. In addition, the ambient environment information presenting apparatus according to the present embodiment is also applicable to motor scooters.

In the following description, the terms left and right, front and rear of the motorcycle 1 are left, right, front and rear directions as seen by the rider sitting on a seat 81 of the motorcycle 1. In Fig. 2, Arrow F indicates a forward direction of the motorcycle 1, Arrow R indicates a rearward direction of the motorcycle 1, Arrow U indicates an upward direction of the motorcycle 1, and Arrow D indicates a downward direction of the motorcycle 1.

The motorcycle 1 includes a body frame 6. The body frame 6 includes a head pipe 61. head pipe 61 is disposed at the front of the motorcycle body. A steering shaft 70 is rotatably inserted into the head pipe 61 in the left-right direction. On top of the steering shaft 70, a handlebar 71 is fixed. The handlebar 71 is rotatable in the left-right direction together with the steering shaft 70.

To the steering shaft 70, front forks 72 are fastened on via brackets. Each of the front fork 72 has a lower end, where a front wheel 73 is attached rotatably. As the rider operates the handlebar 71 in the left-right direction, the front wheel 73 is turned to the left-right direction. Each of the front fork 72 is provided with a front suspension 74.

A seat 81 is provided at a place on a slightly rear side from a middle point in the fore-aft direction of the motorcycle body. The seat 81 is supported by the body frame 6. In front of the seat 81 is a fuel tank 82. The fuel tank 82 is supported by the body frame 6.

Below the fuel tank 82 is an engine 83. The engine 83 is supported by the body frame 6. A rear arm 75 is provided at a rearward position from the engine 83. The rear arm 75 is supported pivotably in an up-down direction around a pivot shaft provided in the body frame 6. The rear arm 75 has its rear portion, where a rear wheel 76 is provided rotatably. A rear suspension 77 is provided between the rear wheel 76 and the body frame 6.

A transmission apparatus 84 is provided behind the engine 83. The transmission apparatus 84 is supported by the body frame 6. An output from the engine 83 is transmitted to the rear wheel 76 via the transmission apparatus 84 and a chain.

### [4. Sensors Mounted on the Motorcycle]

As shown in Fig. 2, the motorcycle 1 according to the present embodiment has a large number of sensors 101 through 109 mounted thereon. An image sensor 101 is in a front portion of the motorcycle body. The image sensor 101 is capable of taking images ahead of the vehicle, and may be provided by, e.g., a CCD (Charge Coupled Device) image sensor or a CMOS (Complementary MOS) image sensor. A sound sensor 102 is provided by a microphone which is mounted near the handlebar 71 for capturing sound from a surrounding environment or the voice of the rider. The image sensor 101 and the sound sensor 102 may be mounted elsewhere.

A distance measuring sensor 103, which is disposed above a head lamp, measures a distance to an observation object. The distance measuring sensor 103 has a light source which casts a light to the observation object and reflects the light on the observation object, and analyzes the reflected light thereby to measure the distance to the observation object. The light source may be provided by an LED, for example.

An orientation sensor 104 is placed below the seat 81, and measures orientation. The orientation sensor 104 may be provided by, e.g., a magnetic sensor. A position information sensor 105 is placed below the seat 81, and obtains position information of the motorcycle 1. The position information sensor 105 may be provided by a GPS (Global Positioning System) reception apparatus.

A temperature sensor 106 is placed below the seat 81, and measures ambient temperatures. A humidity sensor 107 is placed below the seat 81, and measures humidity of the ambient air. An FM receiver 108 is provided below the seat 81, receives FM (Frequency Modulation) multiplex broadcast, and obtains text information such as weather forecast, traffic information, etc. A highway information receiver 109 is placed below the seat 81, and obtains traffic congestion information, road repair/maintenance information of the highways.

### [5. Configuration of the Ambient Environment Information Presenting Apparatus]

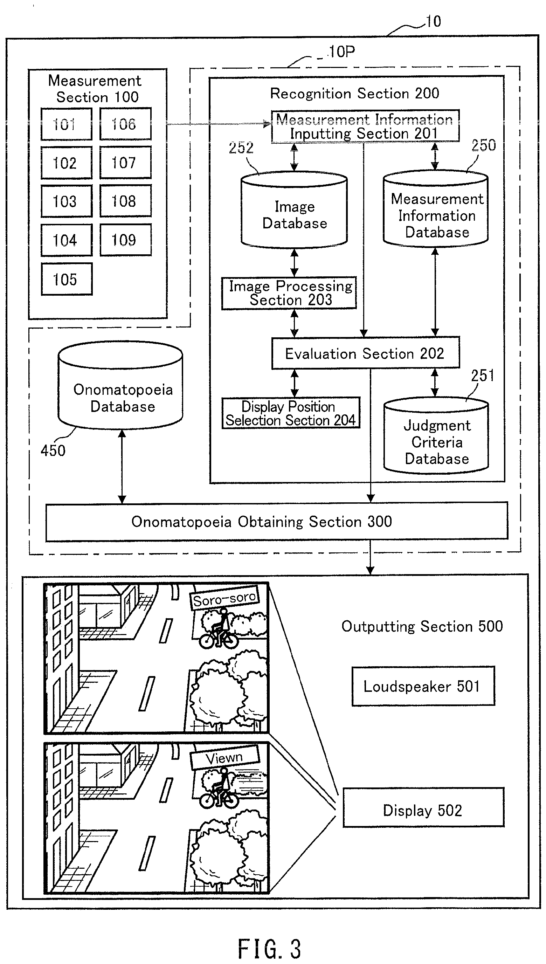

Next, a configuration of the ambient environment information presenting apparatus 10 mounted on the motorcycle 1 will be described with reference to Fig. 3. The ambient environment information presenting apparatus 10 according to the present embodiment includes a measurement section 100, an environment evaluation module 10P, and an outputting section 500. The environment evaluation module 10P includes a recognition section 200, an onomatopoeia obtaining section 300 and an onomatopoeia database 450.

The measurement section 100 has the earlier described sensors 101 through 109. In the present embodiment, the measurement section 100 has nine kinds of sensors 101 through 109 for providing information about an ambient environment. However, this is an example. The measurement section may have selected one of these sensors, or it may further have other sensors. For example, it may have an infrared sensor or a stereo camera. Further, it may have sensors for measuring the rider's biological information (e.g., blood flow sensor and perspiration sensor). The measurement section 100 takes measurements of an event in the ambient environment necessary for grasping an environmental state.

The recognition section 200 is a processing section which evaluates the surrounding environment based on the information measured by the measurement section 100. The recognition section 200 includes a measurement information inputting section 201, an evaluation section 202, an image processing section 203, a display position selection section 204, a measurement information database 250, a judgment criteria database 251 and an image database 252.

To the measurement information inputting section 201, information measured in the measurement section 100 is inputted. In other words, information measured by the various sensors 101 through 109 is inputted. The measurement information inputting section 201 stores the inputted measurement information, other than image data, in the measurement information database 250. Details of the measurement information database 250 will be described later. The measurement information inputting section 201 stores image data obtained by the image sensor 101, in the image database 252. Details of the image database 252 will be described later.

The image processing section 203 performs image processing to the image data which is stored in the image database 252. Contents of the processing performed by the image processing section 203 will be described later in detail. In short, the image processing section 203 recognizes objects, such as automobiles and bicycles, contained in the image data and analyzes movements of the objects, such as automobiles and bicycles. Further, the image processing section 203 recognizes a road, and analyzes road conditions.

The evaluation section 202 evaluates the surrounding environment based on the measurement information stored in the measurement information database 250, results of the image analysis performed in the image processing section 203, and a judgment criteria table stored in the judgment criteria database 251. The evaluation section 202 selects an onomatopoeia which represents the evaluation result of the surrounding environment. Methods of evaluation by the evaluation section 202 will be detailed later.

The display position selection section 204 selects a position for displaying the onomatopoeia. As will be described later, in the present embodiment, part of a face shield of a helmet worn by the rider is utilized as a display for projecting the onomatopoeia. The display position selection section 204 determines where in the display the onomatopoeia should be displayed.

The onomatopoeia obtaining section 300 accesses the onomatopoeia database 450 to obtain data which corresponds to the onomatopoeia selected in the evaluation section 202. The onomatopoeia obtaining section 300 outputs the obtained onomatopoeia data to the outputting section 500. The outputting section 500 outputs the onomatopoeia data, thereby notifying the rider of the evaluation result of the surrounding environment.

The outputting section 500 has a loudspeaker 501 and a display 502. In cases where audio data is used as the onomatopoeia data, the loudspeaker 501 is used as the outputting section 500. In cases where text data or image data is used as the onomatopoeia data, the display 502 is used as the outputting section 500. Onomatopoeia in text data is recorded as character information. Onomatopoeia in image data is recorded as image information.

"The environment evaluation module 10P" in the present embodiment includes the function of the "device for presenting an onomatopoeia pertaining to results of evaluating a surrounding environment" according to the present teaching. The "measurement result inputting section" included in the "device for presenting an onomatopoeia pertaining to results of evaluating a surrounding environment" according to the present teaching corresponds to the "measurement information inputting section 201" included in the "environment evaluation module 10P". The "onomatopoeia data obtaining section" included in the "device for presenting an onomatopoeia pertaining to results of evaluating a surrounding environment" according to the present teaching corresponds to the "onomatopoeia obtaining section 300" included in the "environment evaluation module 10P". The "onomatopoeia outputting section" included in the "device for presenting an onomatopoeia pertaining to results of evaluating a surrounding environment" according to the present teaching is included in the "onomatopoeia obtaining section 300" included in the "environment evaluation module 10P". The "notification device" from which the "device for presenting an onomatopoeia pertaining to results of evaluating a surrounding environment" according to the present teaching outputs the onomatopoeia data corresponds to the "outputting section 500".

The "device for presenting an onomatopoeia pertaining to results of evaluating a surrounding environment" according to the present teaching may contain the measurement information database 250 or have the measurement information database 250 outside of the device. The "device for presenting an onomatopoeia pertaining to results of evaluating a surrounding environment" according to the present teaching may contain the evaluation section 202 or make use of the evaluation section located outside of the device. For example, the evaluation section may be located in a server which is connected via a network. The "device for presenting an onomatopoeia pertaining to results of evaluating a surrounding environment" according to the present teaching may contain the onomatopoeia database 450 or have the onomatopoeia database 450 outside of the device.

The "device for presenting an onomatopoeia pertaining to results of evaluating a surrounding environment" according to the present teaching may contain the image database 252 or have the image database 252 outside of the device. The "device for presenting an onomatopoeia pertaining to results of evaluating a surrounding environment" according to the present teaching may contain the image processing section 203 or make use of the image processing section 203 located outside of the device. For example, the image processing section may be located in a server which is connected via a network. The "device for presenting an onomatopoeia pertaining to results of evaluating a surrounding environment" according to the present teaching may include the display position selection section 204 or have the display position selection section 204 outside of the device. For example, the display position selection section may be located in a server which is connected via a network.

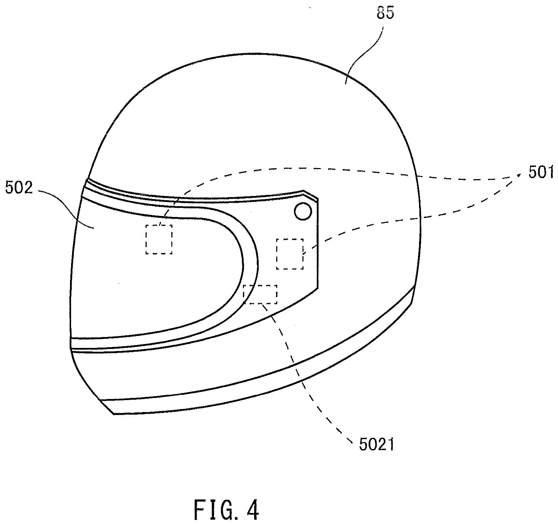

Fig. 4 shows a helmet 85 which is worn by the rider when riding on the motorcycle 1. The helmet 85 is provided with a left and a right loudspeaker 501, 501. The rider who wears the helmet 85 and is operating the motorcycle 1 can check onomatopoeia from the loudspeakers 501, 501 by sound.

The helmet 85 has a face shield, part of which is used as the display 502. The helmet 85 is provided with an AR (Augmented Reality) projector 5021, which outputs images on the display 502. The rider who wears the helmet 85 and is operating the motorcycle 1 can check onomatopoeia which is outputted in the display 502 by image.

In the present embodiment, an AR projector 5021 projects the onomatopoeia at a place where a straight line which connects the rider's point of view and the observation object crosses the display 502. In other words, the AR projector 5021 makes a control so that the onomatopoeia is displayed ahead of the line of sight of the rider who sees the observation object. The arrangement naturally guides the rider to see the observation object as he/she turns his/her eyes toward the onomatopoeia which is projected in the display 502.

In the present embodiment, loudspeakers for outputting onomatopoeia are provided in a helmet worn by the rider; however, the loudspeakers may be placed at different places. For example, the loudspeakers may be on a front cowl or near the handlebar.

In the present embodiment, the face shield of a helmet which is worn by the rider is used as a display for displaying onomatopoeia; however, the display is not limited to this. In all cases, the rider should be able to see the onomatopoeia easily, and to this ends it is desirable for the display to be disposed in a transparent or translucent member disposed ahead of the rider's eyes.

Referring to Fig. 3 again, in the present embodiment, the measurement information inputting section 201, the evaluation section 202, the image processing section 203, the display position selection section 204 and the onomatopoeia obtaining section 300 are implemented by a CPU (Central Processing Unit), a memory and a piece of software which operates on the CPU while utilizing the memory as a work area. Also, in the present embodiment, parts such as the CPU, the work memory, a ROM, and others which implement the measurement information inputting section 201 the evaluation section 202, the image processing section 203, the display position selection section 204 and the onomatopoeia obtaining section 300; and parts such as a memory and others which store the measurement information database 250, the judgment criteria database 251, the image database 252 and the onomatopoeia database 450, are disposed on one or a plurality of substrates in the form of the environment evaluation module 10P. As shown in Fig. 2, in the present embodiment, the environment evaluation module 10P is disposed below the seat 81.

Alternatively, part or all of the measurement information inputting section 201, the evaluation section 202, the image processing section 203, the display position selection section 204 and the onomatopoeia obtaining section 300 may be provided by a piece of hardware. In this case again, parts such as the hardware and others which implement the measurement information inputting section 201, the evaluation section 202, the image processing section 203, the display position selection section 204 and the onomatopoeia obtaining section 300; and parts such as the memory and others which store the measurement information database 250, the judgment criteria database 251, the image database 252 and the onomatopoeia database 450 are disposed on one or a plurality of substrates in the form of the environment evaluation module 10P.

### [6. Measurement Information Database]

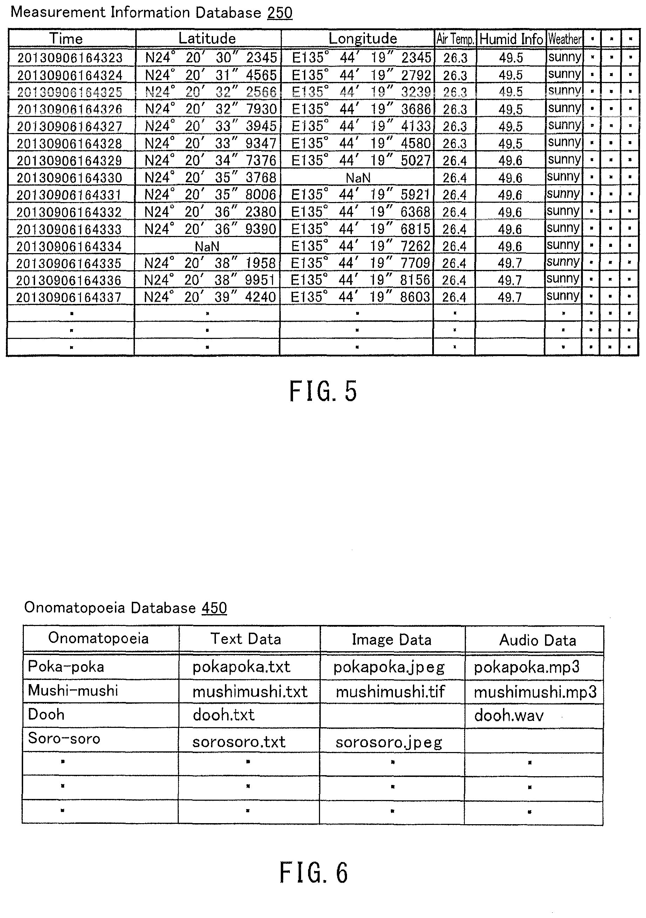

Referring to Fig. 5, the measurement information database 250 will be described. From the measurement information which is inputted from the measurement section 100, the measurement information inputting section 201 stores information other than image data in the measurement information database 250. In other words, the measurement information inputting section 201 stores measurement information which is inputted from various sensors 102 through 109, into the measurement information database 250. As shown in Fig. 5, data stored in the measurement information database 250 is kept as a record with time-point information as key information. In other words, measurement information obtained at each time-point is related with time-point information and stored in the measurement information database 250. The Lime-point information is obtained from a timer (not illustrated) which is provided in the environment evaluation module 10P.

Latitude information and longitude information are measurement information obtained by the position information sensor 105. Air temperature information is measurement information obtained by the temperature sensor 106. Humidity information is measurement information obtained by the humidity sensor 107. Weather information is obtained from text information received by the FM receiver 108.

Although Fig. 5 shows information measured by a limited number of the sensors 102 through 109, measurement information obtained by all of the sensors 102 through 109 is related to the time-point information and stored in the measurement information database 250. In Fig. 5, NaN (Not a Number) is inputted as the measurement information in some fields. This means that measurement information was not obtained from the relevant sensor.

### [7. Image Database]

The image database 252 stores image data obtained by the image sensor 101. There is no specific limitation to formatting of the image data. Examples of usable format include JPEG (Joint Photographic Experts Group) and TIFF (Tagged Image File Format).

The image database 252 stores images taken by the image sensor 101, of a forward of the motorcycle 1 at a frame rate of, e.g., 10-frames per second. The ambient environment information presenting apparatus 10 according to the present embodiment needs to recognize observation objects such as automobiles and bicycles appearing ahead of the motorcycle 1, and present the rider with a state of these observation objects as an environmental evaluation result. Therefore, it is desirable that the image data is obtained at a relatively high frame rate such as 10 frames per seconds so that the state of the observation objects can be analyzed as accurately as possible.

In cases where the ambient environment information presenting apparatus is utilized in other applications that do not require real-time presentation of the state of the surrounding environment, there is no problem with using a lower frame rate for the image data. The frame rate for the image data should be selected appropriately for the application in which the ambient environment information presenting apparatus is utilized.

The image data may be stored for an appropriate period of time; for example, data from the previous ten minutes may be stored in the image database 252. The storage period for the image data should be selected appropriately for the application in which the ambient environment information presenting apparatus is utilized.

### [8. Onomatopoeia Database]

Referring to Fig. 6, the onomatopoeia database 450 will be described. The onomatopoeia database 450 stores onomatopoeia in the form of text data, image data, audio data, etc. In the text data, character strings representing an onomatopoeia are recorded as character codes. In the image data, character strings representing an onomatopoeia are recorded as image information. The image data may be of a format such as JPEG (Joint Photographic Experts Group) and TIFF (Tagged Image File Format). There is no specific limitation, and any available formats may be employed for use. The image data may be provided by video data in the form of, e.g., MPEG. In the audio data, character strings representing an onomatopoeia are recorded as audio information. The audio data may be of a format such as MP3 (MPEG-1 Audio Layer-3) and AAC (Advanced Audio Coding). There is no specific limitation and any available formats may be employed for use.

For example, if a text data or an image data is stored for an onomatopoeia the onomatopoeia obtaining section 300 can output the onomatopoeia to the display 502. Also, if an audio data is stored for an onomatopoeia, the onomatopoeia obtaining section 300 can output the onomatopoeia to the loudspeakers 501.

Referring to an example shown in Fig. 6, for an onomatopoeia "poka-poka" ("poka-poka" in the Japanese sound, state-mimic onomatopoeia), a text data (pokapoka.txt) which is a record of a character string "poka-poka" is stored in the onomatopoeia database 450. Also, an image data (pokapoka.jpeg) which is an image record of the character string "poka-poka" and an audio data (pokapoka.mp3) which is a record of a sound "pokapoka" are stored in the onomatopoeia database 450.

### [9. Environment Evaluation Method]

Next, description will cover an environment evaluation processing method. As has been described earlier, measurement information measured in the measurement section 100 is stored in the measurement information database 250 by the measurement information inputting section 201. Also, image data obtained by the image sensor 101 is stored in the image database 252 by the measurement information inputting section 201. The image processing section 203 performs various image analysis procedures to the image data which is stored in the image database 252. The evaluation section 202 makes reference to the measurement information database 250, the image analysis results performed in the image processing section 203, and the judgment criteria database 251, to evaluate the surrounding environment. The evaluation section 202 selects an onomatopoeia which corresponds to the evaluation of the surrounding environment.

For a specific environment evaluation item, the evaluation section 202 performs the evaluation of the surrounding environment based on a piece of measurement information stored in the measurement information database 250. For example, the evaluation section 202 performs an evaluation of the surrounding environment regarding warmness/coldness based on air temperature information collected by the temperature sensor 106.

For another environment evaluation item, the evaluation section 202 performs the evaluation of the surrounding environment based on a plurality of pieces of measurement information stored in the measurement information database 250. For example, the evaluation section 202 performs an evaluation of the surrounding environment based on air temperature information collected by the temperature sensor 106 and humidity information collected by the humidity sensor 107. The air temperature information is usable for evaluating warmness/coldness. The humidity information is usable for evaluating a level of comfort. The evaluation section 202 performs one environment evaluation for two environment evaluation items, i.e., warmness/coldness and the level of comfort.

For still another environment evaluation item, the evaluation section 202 performs the evaluation of the surrounding environment using an arithmetically calculated value based on one piece of measurement information stored in the measurement information database 250 (i.e., not based on a raw value contained in the measurement information but based on manipulated information of the measurement information). In the manipulated information of the measurement information, image analysis results performed in the image processing section 203 to image data which was obtained by the image sensor 101 are also included. For example, the evaluation section 202 performs an environment evaluation based on information about a moving object detected in image data which was obtained by the image sensor 101.

For still another environment evaluation item, the evaluation section 202 performs the evaluation of the surrounding environment using an arithmetically calculated value based on plural pieces of measurement information stored in the measurement information database 250 (i.e., not based on a raw value contained in the measurement information but based on manipulated information of the measurement information). In the manipulated information of the measurement information, image analysis results performed in the image processing section 203 to image date which was obtained by the image sensor 101 are also included. For example, the evaluation section 202 performs an environment evaluation based on information regarding quietness level which is a calculated value based on an audio data collected by the sound sensor 102, and information regarding congestion level which is a calculated value based on traffic jam information obtained by the highway information receiver 109. The evaluation section 202 performs one environment evaluation for two environment evaluation items, i.e., the quietness level and the congestion level.

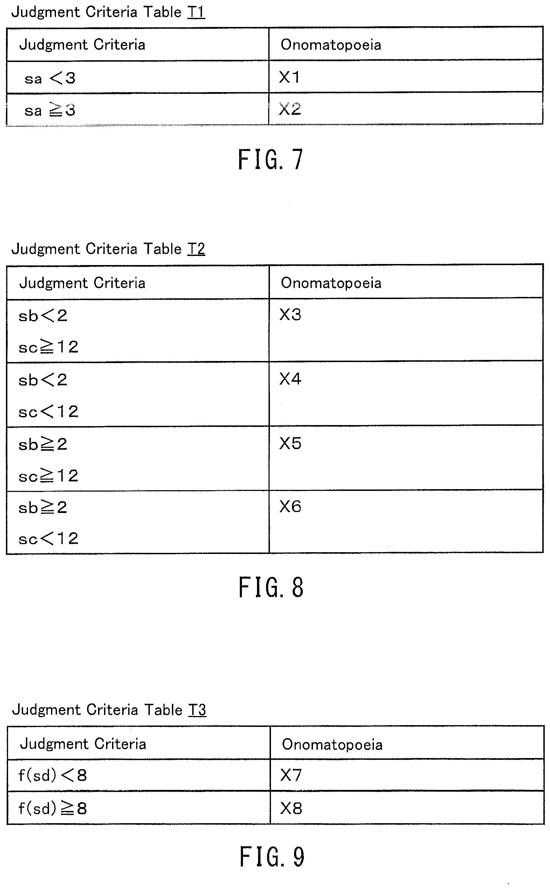

Fig. 7 shows a judgment criteria table T1 stored in the judgment criteria database 251 for reference by the evaluation section 202 useful for understanding the invention. By making reference to the judgment criteria table T1, the evaluation section 202 performs an environment evaluation for a specific environment evaluation item (hereafter, environment evaluation item A) based on one piece of measurement information. In the criteria table T1, if a piece of measurement information (measured value) sa satisfies the condition sa<3, there is an environment evaluation for the environment evaluation item A, to which an onomatopoeia X1 is assigned. In the criteria table T1, if a piece of measurement information (measured value) sa satisfies the condition sa≥3, there is an environment evaluation for the environment evaluation item A, to which an onomatopoeia X2 is assigned.

As mentioned in an earlier example, the evaluation section 202 performs an environment evaluation regarding warmness/coldness based on air temperature information. In this case, the environment evaluation item A is an evaluation item regarding the warmness/coldness. As the onomatopoeia X1, "poka-poka" ("poka-poka" in the Japanese sound, a state-mimic onomatopoeia expressing warmness) is assigned. As the onomatopoeia X2, "keen" ("keen" in the Japanese sound, a state-mimic onomatopoeia expressing coldness) is assigned. As understood, the onomatopoeia X1 and the onomatopoeia X2 make it possible to express a multi-graded evaluation regarding an environment evaluation item, i.e., warmness/coldness.

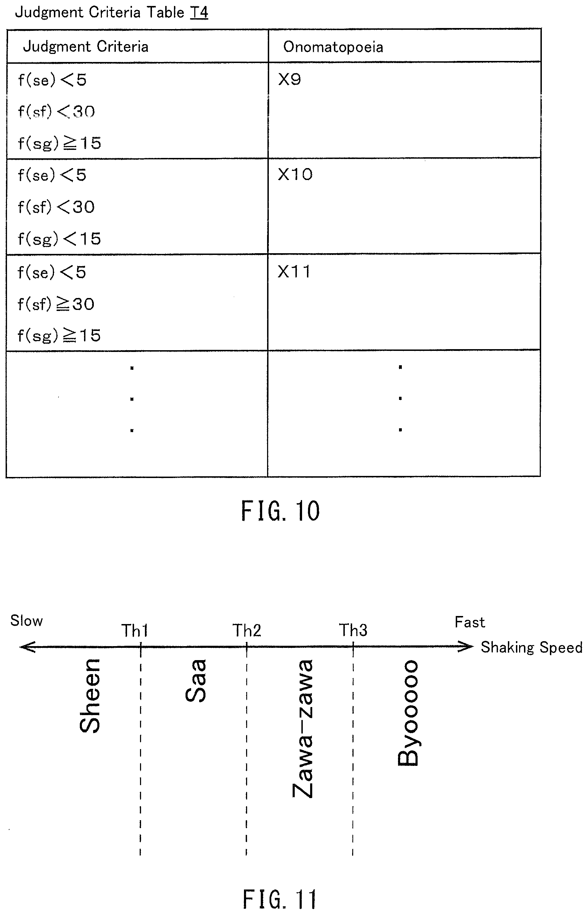

Another example will be described with reference to Fig. 11 through Fig. 13. Fig. 11 shows an evaluation item regarding wind strength. The evaluation section 202 selects an onomatopoeia in accordance with a speed at which a tree shakes that is recognized by a result of the image analysis. Fig. 11 shows an example, in which three threshold values Th1, Th2, Th3 are set regarding the speed at which a tree shakes. Then, four onomatopoeias are assigned in the order from the slowest speed, namely, "Sheen" ("Sheen" in the Japanese sound, a state-mimic onomatopoeia), "Saa" ("Saa" in the Japanese sound, a state-mimic onomatopoeia), "zawa-zawa" ("zawa-zawa" in the Japanese sound, a state-mimic onomatopoeia), "byooooo" ("byooooo" in the Japanese sound, a state-mimic onomatopoeia).

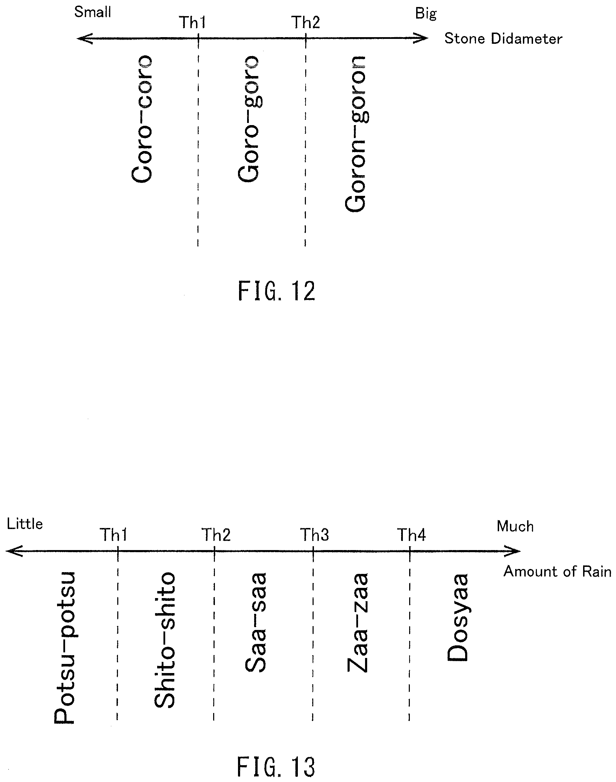

Fig. 12 shows an evaluation item regarding a road condition. The evaluation section 202 selects an onomatopoeia in accordance with a diameter of a stone on the road that is recognized by a result of the image analysis. Fig. 12 shows an example, in which two threshold values Th1, Th2 are set regarding the diameter of the stone. Then, three onomatopoeias are assigned in the order of smallest diameter of the stone, namely, "coro-coro" ("coro-coro" in the Japanese sound, a state-mimic onomatopoeia), "goro-goro" ("goro-goro" in the Japanese sound, a state-mimic onomatopoeia), "goron-goron" ("goron-goron" in the Japanese sound, a state-mimic onomatopoeia).

Fig. 13 shows an evaluation item regarding weather conditions. The evaluation section 202 selects an onomatopoeia in accordance with weather information obtained from a measurement information, and the size of raindrops or density of rain shower that is recognized by a result of the image analysis. Fig. 13 shows an example, in which four threshold values Th1, Th2, Th3, Th4 are set regarding the amount of rain. Then, five onomatopoeias are assigned in the order of smallest amount of rain, namely, "potsu-potsu" ("potsu-potsu" in the Japanese sound, a state-mimic onomatopoeia), "shito-shito" ("shito-shito" in the Japanese sound, a state-mimic onomatopoeia), "saa-saa" ("saa-saa" in the Japanese sound, a state-mimic onomatopoeia), "zaa-zaa" ("zaa-zaa" in the Japanese sound, a state-mimic onomatopoeia) and "dosyaa" ("dosyaa" in the Japanese sound, a state-mimic onomatopoeia).

Fig. 8 shows a judgment criteria table T2 stored in the judgment criteria database 251 for reference by the evaluation section 202. By making reference to the judgment criteria table T2, the evaluation section 202 performs environment evaluations for a plurality of environment evaluation items (hereafter, environment evaluation item B and environment evaluation item C) based on plural pieces of measurement information. In the criteria table T2, if one piece of measurement information (measured value) sb and another piece of measurement information (measured value) sc satisfy the following conditions: sb<2 and sc≥12, then there is one environment evaluation for the two environment evaluation items (environment evaluation item B and environment evaluation item C), to which an onomatopoeia X3 is assigned. In the criteria table T2, if one piece of measurement information (measured value) sb and another piece of measurement information (measured value) sc satisfy the following conditions: sb<2 and sc<12, then there is one environment evaluation for the two environment evaluation items (environment evaluation item B and environment evaluation item C), to which an onomatopoeia X4 is assigned. Likewise, in the criteria table T2, if one piece of measurement information (measured value) sb and another piece of measurement information (measured value) sc satisfy the following conditions: sb≥2 and sc≥12, then there is one environment evaluation for the two environment evaluation items (environment evaluation item B and environment evaluation item C), to which an onomatopoeia X5 is assigned. Likewise, in the criteria table T2, if one piece of measurement information (measured value) sb and another piece of measurement information (measured value) sc satisfy the following conditions: sb≥2 and sc<12, then there is one environment evaluation for the two environment evaluation items (environment evaluation item B and environment evaluation item C), to which an onomatopoeia X6 is assigned.

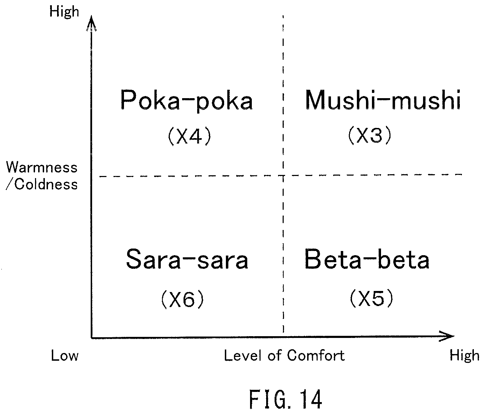

As shown in the above example, the evaluation section 202 performs an environment evaluation based on air temperature information collected by the temperature sensor 106 and humidity information collected by the humidity sensor 107. In this particular case, the environment evaluation item B is an evaluation item regarding warmness/coldness, whereas the environment evaluation item C is an evaluation item regarding level of comfort. As shown in Fig. 14, for the onomatopoeia X3, "mushi-mushi" ("mushi-mushi" in the Japanese sound, a state-mimic onomatopoeia expressing warm and humid) is assigned. For the onomatopoeia X4, "poka-poka" ("poka-poka" in the Japanese sound, a state-mimic onomatopoeia expressing warm and dry) is assigned. For the onomatopoeia X5, "beta-beta" ("beta-beta" in the Japanese sound, a state-mimic onomatopoeia expressing highly humid) is assigned. For the onomatopoeia X6, "sara-sara" ("sara-sara" in the Japanese sound, a state-mimic onomatopoeia expressing cool and dry) is assigned. As described, the evaluation section 202 performs one environment evaluation for two environment evaluation items, i.e., warmness/coldness and the level of comfort and selects one onomatopoeia.

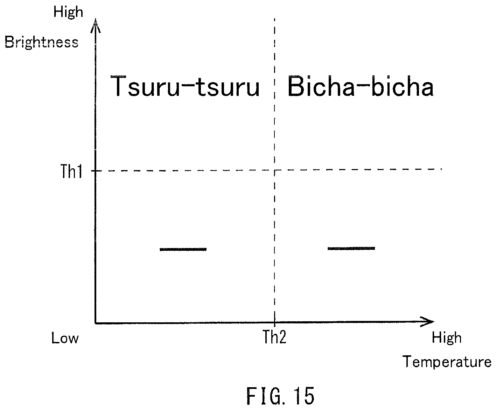

Another example will be described with reference to Fig. 15. Fig. 15 shows an example of evaluation of a road condition. In this example, an evaluation regarding road brightness information and an evaluation regarding temperature are performed. The evaluation section 202 selects an onomatopoeia based on road brightness information collected by image analysis results and temperature information obtained from measurement information. In the example shown in Fig. 15, a threshold value Th1 is set for the brightness, whereas a threshold value Th2 is set for the temperature. When the brightness exceeds the threshold value Th1, it means that shiny objects such as water and ice are detected on the road. The temperature-related threshold value Th2 is set, for example, to zero degree Celsius. In a case where the brightness exceeds the threshold value Th1 and the temperature exceeds the threshold value Th2, an onomatopoeia "becya-becya" ("becya-becya" in the Japanese sound, a state-mimic onomatopoeia) is assigned. In other words, a pool of water on the road is indicated. In a case where the brightness exceeds the threshold value Th1 and the temperature is below the threshold value Th2, an onomatopoeia "tsuru-tsuru" ("tsuru-tsuru" in the Japanese sound, a state-mimic onomatopoeia) is assigned. In other words, frozen road surface is indicated.

Fig. 9 shows a judgment criteria table T3 stored in the judgment criteria database 251 for reference by the evaluation section 202 according to an example useful to understand the invention. By making reference to the judgment criteria table T3, the evaluation section 202 performs an environment evaluation for a specific environment evaluation item (hereafter, environment evaluation item D) based on an arithmetically obtained value (information obtained through manipulating measurement information) which is calculated on a basis of one piece of measurement information. As has been described earlier, in the manipulated information of the measurement information image analysis results performed in the image processing section 203 to image data which was obtained by the image sensor 101 is included. In the criteria table T3, if an arithmetically calculated value f(sd) based on a piece of measurement information sd satisfies the condition f(sd)<8, there is an environment evaluation for the environment evaluation item D, to which an onomatopoeia X7 is assigned. In the criteria table T3, if an arithmetically calculated value f(sd) based on a piece of measurement information sd satisfies the condition f(sd)≥8, there is an environment evaluation for the environment evaluation item D, to which an onomatopoeia X8 is assigned.

Fig. 10 shows a judgment criteria table T4 stored in the judgment criteria database 251 for reference by the evaluation section 202. By making reference to the judgment criteria table T4, the evaluation section 202 performs an environment evaluation for a plurality of environment evaluation items (hereafter, environment evaluation items E, F and G) based on a plurality of arithmetically calculated values (information obtained through manipulating measurement information) based on a plurality of pieces of measurement information As has been described earlier, the manipulated information of the measurement information may be image analysis results performed in the image processing section 203 to image data which was obtained by the image sensor 101. In the judgment criteria table T4, if arithmetically calculated values f(se), f(sf) and f(sg) which are calculated on the basis of measurement information (measured value) se, measurement information (measured value) sf and measurement information (measured value) sg satisfy the following conditions: f(se)<5, f(sf)<30 and f(sg)≥15, then there is one environment evaluation for the three environment evaluation items E, F and G, to which an onomatopoeia X9 is assigned. In the judgment criteria table T4, if arithmetically calculated values f(se), f(sf) and f(sg) which are calculated on the basis of measurement information satisfy the following conditions: f(se)<5, f(sf)<30 and f(sg)<15, then there is one environment evaluation for the three environment evaluation items E, F and G, to which an onomatopoeia X10 is assigned. In the judgment criteria table T4, if arithmetically calculated values f(se), f(sf) and f(sg) which are calculated on the basis of measurement information satisfy the following conditions: f(se)<5, f(sf)≥30 and f(sg)≥15, then there is one environment evaluation for the three environment evaluation items E, F and G, to which an onomatopoeia X11 is assigned. Likewise, the judgment criteria table T4 also lists other value ranges for the arithmetically calculated values f(se), f(sf) and f(sg), and each range has an onomatopoeia assigned.

As described, the evaluation section 202 makes reference to the measurement information database 250, the results of image analysis performed in the image processing section 203 and the judgment criteria database 251, performs an environment evaluation using one or a plurality of pieces of measurement information, or arithmetically calculated values based on one or a plurality of pieces of measurement information, or image analysis results, and identifies an onomatopoeia representing contents of the environment evaluation.

### [10. Process Flow in the Ambient Environment Information Presenting Apparatus]

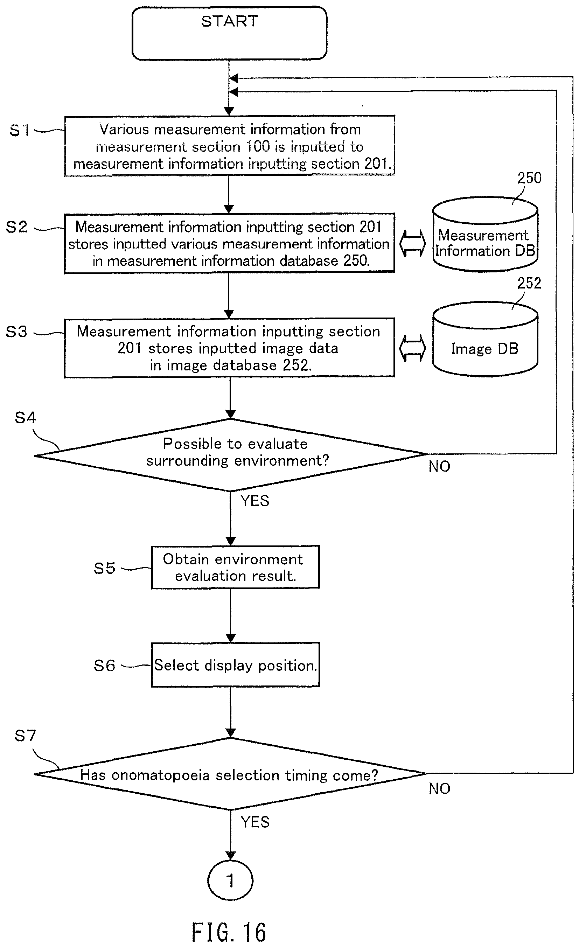

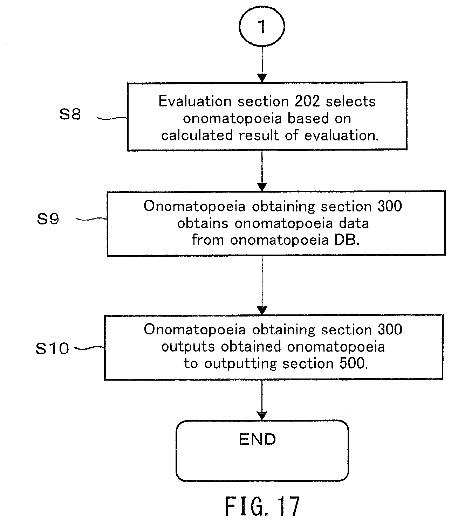

Next, with reference to flow charts in Fig. 16 and Fig. 17, a process flow of the ambient environment information presenting apparatus according to the present embodiment will be described.

Reference is made to Fig. 16. In Step S1, to the measurement information inputting section 201, various kinds of measurement information from the measurement section 100 are inputted. To the measurement information inputting section 201, information measured by the sensors 101 through 109 is inputted.

Next, in Step S2, the measurement information inputting section 201 stores the inputted measurement information in the measurement information database 250. If in Step S1, measurement information was not able to be obtained by the sensor, then NaN (Not a Number) is inputted as the measurement information for that sensor.

Next, in Step S3, the measurement information inputting section 201 stores the inputted image data in the image database 252.

Next, in Step S4, the evaluation section 202 determines whether or not a surrounding environment evaluation is possible. The determination on whether or not the evaluation of the surrounding environment is possible is made at a predetermined time interval such as 1 second. The evaluation section 202 uses a timer (not illustrated) for measurement of time to judge on whether or not an evaluation of the surrounding environment timing has come. The "evaluation of the surrounding environment is possible" means that a set of measurement information is ready for the items regarding the surrounding environment such as weather, road conditions, moving objects, etc., and an environment evaluation can be performed readily.

If it is impossible to make an evaluation of the surrounding environment (Step S4: NO), the process goes to Step S1. If it is possible to make an evaluation of the surrounding environment (Step S4: YES), the process goes to Step S5. In Step S5, the evaluation section 202 obtains a result of the evaluation of the surrounding environment.

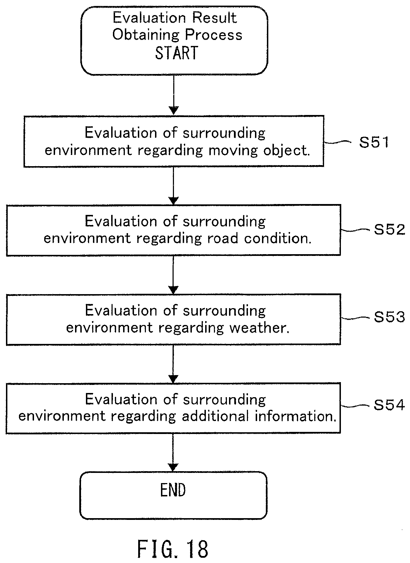

Fig. 18 is a flow chart which shows specific process contents in the evaluation result obtaining process in Fig. 16 (Step S5).

The evaluation section 202 first performs an evaluation of the surrounding environment regarding a moving object based on image analysis results by the image processing section 203 and the measurement information (Step S51). For example, the evaluation section 202 obtains image analysis results from the image processing section 203 in order to evaluate a speed of a bicycle which is moving ahead of the motorcycle 1. As another example, an image analysis result is obtained in order to evaluate a speed of a pedestrian who is moving near the motorcycle 1.

Subsequently, the evaluation section 202 performs an evaluation regarding road conditions based on image analysis results by the image processing section 203 and the measurement information (Step S52). For example, the evaluation section 202 performs evaluations, e.g., if the road surface is frozen, if there are pools of water on the road, if there is snow on the road surface, what size(s) of stones there are on the road, based on such information as the color and brightness of the road surface obtained from image analysis results, and temperature information obtained from measurement information.

Subsequently, the evaluation section 202 performs an evaluation of the surrounding environment regarding weather conditions based on image analysis results by the image processing section 203 and on measurement information (Step S53). For example, the evaluation section 202 performs the evaluation regarding the weather based on the color of the sky obtained by the image analysis results and weather information or temperature information obtained from measurement information.

Subsequently, the evaluation section 202 performs an evaluation regarding additional information based on image analysis results by the image processing section 203 and on measurement information (Step S54). For example, the evaluation section 202 evaluates a level of traffic congestion based on traffic jam information obtained from measurement information.

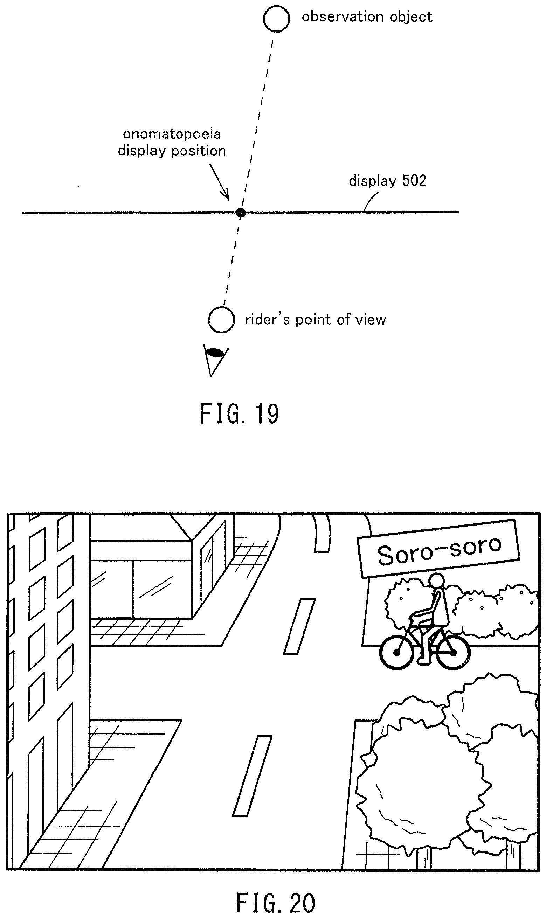

Next, in Step S6, the display position selection section 204 selects a position for displaying the onomatopoeia. As shown in Fig. 19, the display position selection section 204 selects a place where a straight line that connects the rider's point of view and the observation object crosses the display 502 as the position for displaying the onomatopoeia.

The image processing section 203 performs an image analysis procedure to recognize an observation object. For example, assuming that a bicycle is recognized in the image analysis. The image analysis procedure performed by the image processing section 203 enables to estimate the position and direction where the bicycle is. Also, the display position selection section 204 keeps beforehand the eye position of the rider who is riding the motorcycle 1. The display position selection section 204 calculates a straight line which connects the estimated position of the bicycle based on image analysis results and the rider's eye position, and selects a place where that straight line and the display 502 cross each other as the position for displaying the onomatopoeia.

The display position selection section 204 may also use a distance measuring sensor 103 in order to identify the position of an observation object. The display position selection section 204 is capable of obtaining an accurate distance to an observation object by correcting the position of the observation object estimated in the image analysis results with the distance to the observation object measured by the distance measuring sensor 103. Alternatively, the display position selection section 204 may identify the position of the observation object by means of a position information sensor 105.

Upon selecting the display position of the onomatopoeia, the display position selection section 204 generates display position information and sends it to the evaluation section 202. The evaluation section 202 sends the display position information to the onomatopoeia obtaining section 300 together with the result of the evaluation of the surrounding environment. It should be noted here that when there is no need for adjusting the onomatopoeia display position in accordance with the position of the observation object, a default position is assigned as the display position information. For example, display position does not have special meaning when displaying a state of traffic congestion. In such a case, the onomatopoeia is displayed at a default position.

Next, in Step S7, the onomatopoeia obtaining section 300 makes a judgment on whether or not an onomatopoeia selection timing has come. The onomatopoeia obtaining section 300 judges that the onomatopoeia selection timing has come if there is an environment evaluation result obtained in Step S5.

If an onomatopoeia selection timing has not yet come (Step S7: NO), the process returns to Step S1, and continues the task of inputting measurement information. In the measurement information database 250, measurement information related to time-point information is accumulated.

If an onomatopoeia selection timing has come, (Step S7: YES), the evaluation section 202 selects an onomatopoeia based on the result of the evaluation of the surrounding environment which was obtained in Step S5 (Step S8 in Fig. 17). An onomatopoeia is selected through execution of a process such as the one described with reference to Fig. 7 through Fig. 10 for example.

Next, the onomatopoeia obtaining section 300 accesses the onomatopoeia database 450 to obtain onomatopoeia data which represents the onomatopoeia selected in Step S8 (Step S9). The onomatopoeia obtaining section 300 outputs the obtained onomatopoeia data and the display position information obtained in Step S6 to the outputting section 500 (Step S10). As a result, the obtained onomatopoeia is outputted from the loudspeaker 501 for example. In another case, the obtained onomatopoeia is outputted in the display 502. The onomatopoeia is displayed in the display 502 based on the display position information.

Fig. 20 shows an example of the onomatopoeia displayed in the display 502 based on the display position information. Fig. 20 shows an image to be seen by the rider. In other words, the figure shows an image to be seen by the rider through the face shield of the helmet 85. As shown in the figure, a bicycle is approaching the road ahead of the motorcycle 1. The bicycle is recognized by the image processing section 203, and further, as a result of an image analysis procedure, the bicycle's moving speed is evaluated as very slow. Thus, the onomatopoeia obtaining section 300 selects, as an onomatopoeia which corresponds to the evaluated moving speed of the bicycle, "soro-soro" ("soro-soro" in the Japanese sound, a state-mimic onomatopoeia). Also, the display position selection section 204 selects the onomatopoeia display position to be near the bicycle, based on an image analysis result and a result of a measurement made by the distance measuring sensor 103. Thus, as shown in Fig. 20, the onomatopoeia "soro-soro" is displayed near the bicycle.

Also, the left and right loudspeakers 501 may be provided by directional speakers. This arrangement makes it possible, in audio output of onomatopoeia, to let the rider know the position of the observation object by adjusting the sound which is outputted through the left and right loudspeakers 501. Specifically, it is possible to let the rider recognize the position of the sound source by means of phase difference of the sound outputted from the left and right loudspeakers. By using this method, it becomes possible to let the rider know where the moving object is, or in which direction there is a pool of water in the road, etc.

Also, in the present embodiment, description was made for a case where parts such as the CPU, the work memory, the ROM, and others which implement the measurement information inputting section 201, the evaluation section 202, the image processing section 203, the display position selection section 204 and the onomatopoeia obtaining section 300; and parts such as a memory and others which store the measurement information database 250, the judgment criteria database 251, the image database 252 and the onomatopoeia database 450 are disposed on one or a plurality of substrates in the form of the environment evaluation module 10P. With the above, as shown in Fig. 2, in the present embodiment, the environment evaluation module 10P is disposed below the seat 81. As understood, the "device for presenting an onomatopoeia pertaining to results of evaluating a surrounding environment" according to the present teaching is mounted on the motorcycle 1 as a part of the vehicle.

As another embodiment, for example, a mobile information terminal device such as a smartphone may be used as the "the environment evaluation module 10P" which is provided by the "device for presenting an onomatopoeia pertaining to results of evaluating a surrounding environment" according to the present teaching. In other words, it is possible for the rider to bring his/her smartphone and mount it on the motorcycle 1 to use it as an "environment evaluation module".

The rider can download and install "environment evaluation module software" into his/her smartphone from a server on a network to use his/her smartphone as an "environment evaluation module". As understood, programs for a computer to work as the device for presenting an onomatopoeia pertaining to results of evaluating a surrounding environment are also included in embodiments of the present teaching. Also, computer readable non-transitory memory media containing such programs are also included in embodiments of the present teaching.

The sensors 101 through 109 covered in the above-described embodiment are "measuring devices" usable in the present teaching. The "measuring devices" usable in the present teaching may be mounted on the motorcycle 1 like the sensors 101 through 109, or it is not necessary for them to be mounted on the motorcycle 1. For example, the "measuring device" may be provided by various sensors included in a smartwatch. For example, a smartwatch may have an acceleration sensor, an image sensor, a biological information sensor, a GPS reception device, and a temperature sensor, and these may be utilized. As described, the measuring device may be provided by a sensor for detecting a state quantity of a surrounding environment which is of an interest for the rider (user).

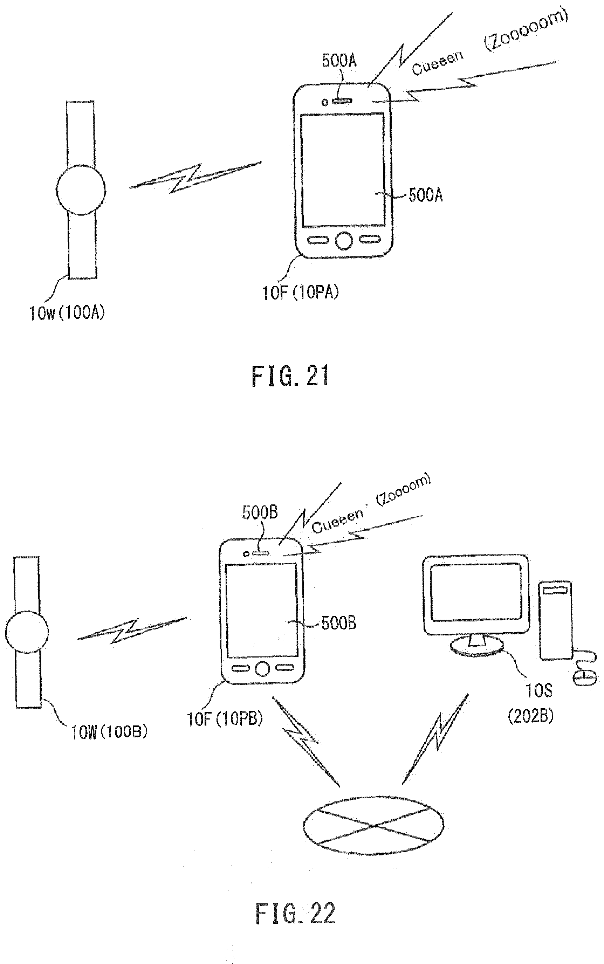

Fig. 21 shows an example of configuration of such an embodiment which includes a measuring device 100A, the environment evaluation module 10P and the outputting section 500. In Fig. 21, the "measuring device" is provided by a smartwatch 10W, whereas the "environment evaluation module" and the "outputting section" are provided by a smartphone 10F. The rider wears the smartwatch 10W on his/her wrist, thereby using the smartwatch 10W as a measuring device 100A. The rider has the "environment evaluation module software" installed on the smartphone 10F mounted on the vehicle, thereby using the smartphone 10F as the environment evaluation module 10PA. Also, the rider uses a loudspeaker or a display of the smartphone 10F as an output section 500A.

The smartphone 10F makes use of its communication means such as Bluetooth, to input various measurement information from the smartwatch 10W which serves as the measuring device 100A. The environment evaluation module 10PA provided by the smartphone 10F obtains onomatopoeia data based on the measurement information. The smartphone 10F outputs the obtained onomatopoeia as audible sound from the loudspeaker of the smartphone 10F. Alternatively, the smartphone 10F outputs the onomatopoeia as visible image on the display of the smartphone 10F.

The smartwatch 10W may also be used as an "outputting section". The smartphone 10F sends the obtained onomatopoeia data to the smartwatch 10W using its communication means such as Bluetooth. The smartwatch 10W outputs the received onomatopoeia data as audible sound from a loudspeaker of the smartwatch 10W or from headphones connected to the smartwatch 10W. Alternatively, the smartwatch 10W outputs the onomatopoeia as a visible image on a display of the smartwatch 10W. Also, the smartphone 10F may output the obtained onomatopoeia data through Bluetooth or other communication means, to a loudspeaker or a display mounted on a helmet.

Fig. 22 shows another configuration example of such an embodiment which includes a measuring device 100B, the environment evaluation module 10P and the outputting section 500. In Fig. 22, the "measuring device" is provided by a smartwatch 10W, while part of the functions of the "environment evaluation module" and the functions of the "outputting section" are provided by a smartphone 10F. Also, Fig. 22 is a diagram showing an arrangement in which the "evaluation section" is provided by a computer server 10S connected via a network.

The rider wears the smartwatch 10W on his/her wrist, thereby using the smartwatch 10W as a measuring device 100B. The rider has the "environment evaluation module software" installed on the smartphone 10F mounted on the vehicle, thereby using the smartphone 10F as the environment evaluation module 10PB. However, the environment evaluation module 10PB does not have the function of the "evaluation section". The rider uses a loudspeaker or a display of the smartphone 10F as an outputting section 500B. Also, the computer server 10S which is connected via a network is utilized as an evaluation section 202B.

The smartphone 10F makes use of its communication means such as Bluetooth, to input various measurement information from the smartwatch 10W which serves as the measuring device 100B. Upon input of the measurement information, the smartphone 10F, which functions as the environment evaluation module 10PB, sends the measurement information to the computer server 10S. The computer server 10S, which functions as the evaluation section 202B, evaluates the measurement information and selects onomatopoeia data. The smartphone 10F receives onomatopoeia selection information from the computer server 10S. The smartphone 10F obtains onomatopoeia data from the onomatopoeia database, based on the selection information. The smartphone 10F outputs the obtained onomatopoeia as sound from the loudspeaker of the smartphone 10F. Alternatively, the smartphone 10F outputs the onomatopoeia as an image on the display of the smartphone 10F.

The "outputting section" in the present embodiment may be provided by a speedometer of the motorcycle 1. The speedometer may be provided with a display as part thereof, for displaying onomatopoeia.

In the present embodiment, description was made for a case where the environment evaluation module 10P includes the onomatopoeia database 450. The arrangement allows the onomatopoeia obtaining section 300 to obtain onomatopoeia data in real time. This makes it possible for the outputting section 500 to give the rider real time presentation of onomatopoeia as an environment evaluation.

Another embodiment may be that the motorcycle 1 does not carry the onomatopoeia database but the onomatopoeia database is disposed in a server on a network. In this case, the onomatopoeia obtaining section 300 obtains onomatopoeia data via the network by means of wireless communication. When compared to the case where the motorcycle 1 carries the onomatopoeia database, onomatopoeia data presentation is not done in real time yet it is possible to present the rider with onomatopoeia as an environment evaluation. By utilizing modern high-speed data communications, it is possible for the rider to receive onomatopoeia presented as an environment evaluation while he/she continues his/her riding operation of the motorcycle 1.

As still another embodiment, the onomatopoeia obtaining section 300 may automatically generate onomatopoeia corresponding to environment evaluations. Onomatopoeia is a category of words which appeal to sensations commonly shared by people. Therefore, it is possible to build a database which relates specific phrases to human sensations and the like. As another option, a database may be built which relates existing onomatopoeia with meanings, and by expanding/converting these it is possible to build an algorithm for automatic generation of onomatopoeia. As still another option, a plurality of existing onomatopoeias may be combined to make a new onomatopoeia. For example, "becha-becha" ("becha-becha" in the Japanese sound, a state-mimic onomatopoeia expressing the state of wet) is one onomatopoeia whereas "fuwa-fuwa" ("fuwa-fuwa" in the Japanese sound, a state-mimic onomatopoeia expressing light as cotton) is another. These onomatopoeias have respective meanings. When explaining a state which has both of these meanings, these onomatopoeias may be combined to be "becha-fuwa" ("becha-fuwa" in the Japanese sound, a state-mimic onomatopoeia), and this newly generated onomatopoeia may be presented. An onomatopoeia obtaining section 300 which has an automatic onomatopoeia generation function makes it possible for more appropriate presentation of onomatopoeia to be generated for environment evaluation.

In the embodiments described above, the ambient environment information presenting apparatus according to the present teaching was exemplified as the ambient environment information presenting apparatus 10 mounted on the motorcycle 1. In other words, description was made for an exemplary embodiment in which evaluation of the surrounding environment of the motorcycle 1 was performed and an evaluation result thereof was presented to the rider by means of onomatopoeia. However, an ambient environment information presenting apparatus according to the present teaching may be mounted on vehicles other than a motorcycle, such as an automobile, a bicycle, etc. Likewise, passengers in a vehicle may be presented with results of the evaluation of the surrounding environment. Further, a person who is not in a vehicle, in other words, a pedestrian or a runner may wear an ambient environment information presenting apparatus according to the present teaching. In this case, it is possible to present the pedestrian or the runner with a result of the evaluation of the surrounding environment by means of onomatopoeia.

### REFERENCE SIGNS LIST

- 1: Motorcycle
- 10: Ambient Environment Information Presenting Apparatus
- 10p: Environment Evaluation Module
- 250: Measurement Information Database
- 251: Judgment Criteria Database
- 252: Image Database
- 450: Onomatopoeia Database

## Claims

1. A device (10) for presenting an onomatopoeia pertaining to results of evaluating a surrounding environment, comprising:
a measurement information inputting section (201) into which there is inputted a measurement result about a state measured by a measuring device (101-109) regarding a surrounding environment of a user;
an image processing section (203) configured to perform an image analysis procedure to an image data to thereby obtain an image analysis result;
an evaluation section (202) to make a multi-graded evaluation for a plurality of environment evaluation items using multiple judgement criteria based on the obtained image analysis result and the measurement result and then to select an onomatopoeia which represents the result of the multi-graded evaluation, the onomatopoeia covering a voice-mimic word and a state-mimic word;
an onomatopoeia data obtaining section (300) configured to obtain onomatopoeia data which corresponds to the onomatopoeia selected in the evaluation section (202); and
an onomatopoeia outputting section (500) configured to output the onomatopoeia data obtained by the onomatopoeia data obtaining section (300) to a notification device capable of making a notification to the user in form of audio or text, thereby causing the notification device to present an onomatopoeia that corresponds to the evaluation of the surrounding environment in the form of audio or text while the user is carrying out an action in the surrounding environment.

2. The device for presenting an onomatopoeia pertaining to results of evaluating a surrounding environment according to Claim 1, wherein
the onomatopoeia data obtained by the onomatopoeia data obtaining section (300) is data indicating an onomatopoeia corresponding to an evaluation of the surrounding environment obtained by comparison of the measurement result or a calculated value based on the measurement result with a predetermined threshold value.

3. The device for presenting an onomatopoeia pertaining to results of evaluating a surrounding environment according to one of Claim 1 through Claim 2, wherein
the user includes an operator of a vehicle (1), and
the notification device includes an image display section (502) provided on a transparent or translucent member disposed ahead of the operator's line of sight.

4. The device for presenting an onomatopoeia pertaining to results of evaluating a surrounding environment according to Claim 3, wherein
the state of the surrounding environment includes a state of an object near the vehicle (1); and
the device for presenting an onomatopoeia pertaining to results of evaluating a surrounding environment further comprises
a position locator configured to locate a position of the object;
wherein
the image display section (502) is configured to display the onomatopoeia in form of text, near a region of the member at which the member is crossed by a straight line that connects the operator's point of view and the object's position located by the position locator.

5. The device for presenting an onomatopoeia pertaining to results of evaluating a surrounding environment according to one of Claim 1 through Claim 2, wherein
the user includes an operator of a vehicle (1), and
the notification device includes an audio outputting section (501) provided in a helmet (85) worn by the operator.

6. The device for presenting an onomatopoeia pertaining to results of evaluating a surrounding environment according to Claim 5, wherein
the state of the surrounding environment includes a state of an object near the vehicle (1); and
the device for presenting an onomatopoeia pertaining to results of evaluating a surrounding environment further comprises
a position locator configured to locate a position of the object;
wherein
the audio outputting section (501) includes a directional audio outputting section having directivity, and
the directional audio outputting section is configured to output the onomatopoeia in an audio format in such a way that the position of the object which is located by the position locator is perceived as the sound source.

7. A method for presenting an onomatopoeia pertaining to results of evaluating a surrounding environment, comprising:
a measurement information inputting step (S1) of inputting a measurement result about a state measured by a measuring device (101-109) regarding a surrounding environment of a user;
an image processing step of performing an image analysis procedure to an image data to thereby obtain an image analysis result;
an onomatopoeia data selecting step (S8) of making a multi-graded evaluation for a plurality of environment evaluation items using multiple judgement criteria based on the obtained image analysis result and the measurement result and then selecting an onomatopoeia which represents the result of the multi-graded evaluation, the onomatopoeia covering a voice-mimic word and a state-mimic word;
an onomatopoeia data obtaining step (S9) of obtaining onomatopoeia data which corresponds to the onomatopoeia selected in the onomatopoeia data selecting step (S8);
an onomatopoeia outputting step (S10) which outputs the onomatopoeia data obtained by the onomatopoeia data obtaining step to a notification device capable of making a notification to the user in form of audio or text, thereby causing the notification device to present an onomatopoeia that corresponds to the evaluation of the surrounding environment in the form of audio or text while the user is carrying out an action in the surrounding environment.

8. The method for presenting an onomatopoeia pertaining to results of evaluating a surrounding environment according to Claim 7, wherein
the onomatopoeia data obtained by the onomatopoeia data obtaining step (S9) is data indicating an onomatopoeia corresponding to an evaluation of the surrounding environment obtained by comparison of the measurement result or a calculated value based on the measurement result with a predetermined threshold value.

## Patentansprüche

1. Eine Vorrichtung (10) zum Präsentieren einer Onomatopoesie, die Ergebnisse einer Auswertung einer umliegenden Umgebung betrifft, wobei die Vorrichtung folgende Merkmale aufweist:
einen Messinformationseingabeabschnitt (201), in den ein durch eine Messvorrichtung (101-109) gemessenes Messergebnis über einen Zustand im Hinblick auf eine umliegende Umgebung eines Benutzers eingegeben wird;
einen Bildverarbeitungsabschnitt (203), der dazu konfiguriert ist, einen Bildanalyseprozess an Bilddaten auszuführen, um so ein Bildanalyseergebnis zu erhalten;
einen Auswertungsabschnitt (202), um eine mehrstufige Auswertung für eine Mehrzahl von Umweltauswertungselementen unter Verwendung mehrerer Bewertungskriterien auf der Basis des erhaltenen Bildanalyseergebnisses und des Messergebnisses vorzunehmen und um dann eine Onomatopoesie auszuwählen, die das Ergebnis der mehrstufigen Auswertung darstellt, wobei die Onomatopoesie ein Stimmen-nachgeahmtes Wort und ein Zustands-nachgeahmtes Wort abdeckt;
einen Onomatopoesie-Daten-Erhaltungsabschnitt (300), der dazu konfiguriert ist, Onomatopoesie-Daten zu erhalten, die der in dem Auswertungsabschnitt (202) ausgewählten Onomatopoesie entsprechen; und
einen Onomatopoesie-Ausgabeabschnitt (500), der dazu konfiguriert ist, die durch den Onomatopoesie-Daten-Erhaltungsabschnitt (300) erhaltenen Onomatopoesie-Daten an eine Benachrichtigungsvorrichtung auszugeben, die dazu in der Lage ist, eine Benachrichtigung an einen Benutzer in der Form von Audio oder Text vorzunehmen, wodurch bewirkt wird, dass die Benachrichtigungsvorrichtung eine Onomatopoesie, die der Auswertung der umliegenden Umgebung entspricht, in der Form von Audio oder Text präsentiert, während der Benutzer eine Handlung in der umliegenden Umgebung ausführt.

2. Die Vorrichtung zum Präsentieren einer Onomatopoesie, die Ergebnisse einer Auswertung einer umliegenden Umgebung betrifft, gemäß Anspruch 1, bei der
die durch den Onomatopoesie-Daten-Erhaltungsabschnitt (300) erhaltenen Onomatopoesie-Daten Daten sind, die eine Onomatopoesie angeben, die einer Auswertung der umliegenden Umgebung entspricht, erhalten durch einen Vergleich des Messergebnisses oder eines berechneten Werts auf der Basis des Messergebnisses mit einem vorbestimmten Schwellwert.

3. Die Vorrichtung zum Präsentieren einer Onomatopoesie, die Ergebnisse einer Auswertung einer umliegenden Umgebung betrifft, gemäß einem der Ansprüche 1 bis 2, bei der
der Benutzer eine Bedienperson eines Fahrzeugs (1) umfasst, und
die Benachrichtigungsvorrichtung einen Bildanzeigeabschnitt (502) umfasst, der auf einem transparenten oder lichtdurchlässigen Bauglied bereitgestellt ist, das vor der Sichtlinie der Bedienperson angeordnet ist.

4. Die Vorrichtung zum Präsentieren einer Onomatopoesie, die Ergebnisse einer Auswertung einer umliegenden Umgebung betrifft, gemäß Anspruch 3, bei der
der Zustand der umliegenden Umgebung einen Zustand eines Objekts in der Nähe des Fahrzeugs (1) umfasst; und
die Vorrichtung zum Präsentieren einer Onomatopoesie, die Ergebnisse einer Auswertung einer umliegenden Umgebung betrifft, ferner Folgendes aufweist:
einen Positionslokalisierer, der dazu konfiguriert ist, eine Position des Objekts zu lokalisieren;
wobei der Bildanzeigeabschnitt (502) dazu konfiguriert ist, die Onomatopoesie in Form von Text in der Nähe eines Bereichs des Bauglieds anzuzeigen, bei dem das Bauglied von einer geraden Linie gekreuzt wird, die das Sichtfeld der Bedienperson und die Position des Objekts verbindet, welche durch den Positionslokalisierer lokalisiert wird.

5. Die Vorrichtung zum Präsentieren einer Onomatopoesie, die Ergebnisse einer Auswertung einer umliegenden Umgebung betrifft, gemäß einem der Ansprüche 1 bis 2, bei der
der Benutzer eine Bedienperson eines Fahrzeugs (1) umfasst, und
die Benachrichtigungsvorrichtung einen Audioausgabeabschnitt (501) umfasst, der in einem von der Bedienperson getragenen Helm (85) bereitgestellt ist.

6. Die Vorrichtung zum Präsentieren einer Onomatopoesie, die Ergebnisse einer Auswertung einer umliegenden Umgebung betrifft, gemäß Anspruch 5, bei der
der Zustand der umliegenden Umgebung einen Zustand eines Objekts in der Nähe des Fahrzeugs (1) umfasst; und
die Vorrichtung zum Präsentieren einer Onomatopoesie, die Ergebnisse einer Auswertung einer umliegenden Umgebung betrifft, ferner Folgendes aufweist:
einen Positionslokalisierer, der dazu konfiguriert ist, eine Position des Objekts zu lokalisieren;
wobei der Audioausgabeabschnitt (501) einen Gerichtete-Ausgabe-Abschnitt umfasst, der eine Richtwirkung aufweist, und
der Gerichtete-Ausgabe-Abschnitt dazu konfiguriert ist, die Onomatopoesie in einem Audioformat derart auszugeben, dass die Position des Objekts, welche durch den Positionslokalisierer lokalisiert wird, als die Schallquelle wahrgenommen wird.

7. Ein Verfahren zum Präsentieren einer Onomatopoesie, die Ergebnisse einer Auswertung einer umliegenden Umgebung betrifft, wobei die Vorrichtung folgende Merkmale aufweist:
einen Messinformationseingabeschritt (S1) zum Eingeben eines durch eine Messvorrichtung (101-109) gemessenen Messergebnisses über einen Zustand im Hinblick auf eine umliegende Umgebung eines Benutzers;
einen Bildverarbeitungsschritt zum Ausführen einer Bildanalyseprozess an Bilddaten, um so ein Bildanalyseergebnis zu erhalten;
einen Auswertungsschritt (S8) zum Vornehmen einer mehrstufigen Auswertung für eine Mehrzahl von Umweltauswertungselementen unter Verwendung mehrerer Bewertungskriterien auf der Basis des erhaltenen Bildanalyseergebnisses und des Messergebnisses und dann Auswählen einer Onomatopoesie, die das Ergebnis der mehrstufigen Auswertung darstellt, wobei die Onomatopoesie ein Stimmen-nachgeahmtes Wort und ein Zustands-nachgeahmtes Wort abdeckt;
einen Onomatopoesie-Daten-Erhaltungsschritt (S9) zum Erhalten von Onomatopoesie-Daten, die der in dem Auswertungsschritt (s8) ausgewählten Onomatopoesie entsprechen; und
einen Onomatopoesie-Ausgabeschritt (S10), der die durch den Onomatopoesie-Daten-Erhaltungsschritt erhaltenen Onomatopoesie-Daten an eine Benachrichtigungsvorrichtung ausgibt, die dazu in der Lage ist, eine Benachrichtigung an einen Benutzer in der Form von Audio oder Text vorzunehmen, wodurch bewirkt wird, dass die Benachrichtigungsvorrichtung eine Onomatopoesie, die der Auswertung der umliegenden Umgebung entspricht, in der Form von Audio oder Text präsentiert, während der Benutzer eine Handlung in der umliegenden Umgebung ausführt.

8. Das Verfahren zum Präsentieren einer Onomatopoesie, die Ergebnisse einer Auswertung einer umliegenden Umgebung betrifft, gemäß Anspruch 7, bei der
die durch den Onomatopoesie-Daten-Erhaltungsschritt (S9) erhaltenen Onomatopoesie-Daten Daten sind, die eine Onomatopoesie angeben, die einer Auswertung der umliegenden Umgebung entspricht, erhalten durch einen Vergleich des Messergebnisses oder eines berechneten Werts auf der Basis des Messergebnisses mit einem vorbestimmten Schwellwert.

## Revendications

1. Dispositif (10) pour présenter une onomatopée relative à des résultats d'évaluation d'un environnement aux alentours, comprenant:
un segment d'entrée d'informations de mesure (201) dans lequel est entré un résultat de mesure relatif à un état mesuré par un dispositif de mesure (101 à 109) en ce qui concerne un environnement aux alentours d'un utilisateur;
un segment de traitement d'image (203) configuré pour effectuer une procédure d'analyse d'image sur les données d'image pour obtenir ainsi un résultat d'analyse d'image;
un segment d'évaluation (202) destiné à effectuer une évaluation à plusieurs niveaux pour une pluralité d'éléments d'évaluation de l'environnement à l'aide de multiples critères de jugement sur base du résultat d'analyse d'image obtenu et du résultat de mesure et à sélectionner ensuite une onomatopée qui représente le résultat de l'évaluation à plusieurs niveaux, l'onomatopée couvrant un mot mimant une voix et un mot mimant l'état;
un segment d'obtention de données d'onomatopée (300) configuré pour obtenir les données d'onomatopée qui correspondent à l'onomatopée sélectionnée dans le segment d'évaluation (202); et
un segment de sortie d'onomatopée (500) configuré pour sortir les données d'onomatopée obtenues par le segment d'obtention de données d'onomatopée (300) vers un dispositif de notification à même de faire une notification à l'utilisateur sous forme d'audio ou de texte, amenant ainsi le dispositif de notification à présenter une onomatopée qui correspond à l'évaluation de l'environnement aux alentours sous forme d'audio ou de texte tandis que l'utilisateur réalise une action dans l'environnement aux alentours.

2. Dispositif de présentation d'une onomatopée relative à des résultats d'évaluation d'un environnement aux alentours selon la revendication 1, dans lequel
les données d'onomatopée obtenues par le segment d'obtention de données d'onomatopée (300) sont des données indiquant une onomatopée correspondant à une évaluation de l'environnement aux alentours obtenue par comparaison du résultat de mesure ou d'une valeur calculée sur base du résultat de mesure avec une valeur de seuil prédéterminée.

3. Dispositif de présentation d'une onomatopée relative à des résultats d'évaluation d'un environnement aux alentours selon l'une des revendications 1 à 2, dans lequel
l'utilisateur inclut un conducteur d'un véhicule (1), et
le dispositif de notification comporte un segment d'affichage d'image (502) prévu sur un élément transparent ou translucide disposé devant la ligne de mire du conducteur.

4. Dispositif de présentation d'une onomatopée relative à des résultats d'évaluation d'un environnement aux alentours selon la revendication 3, dans lequel
l'état de l'environnement aux alentours comporte un état d'un objet à proximité du véhicule (1); et
le dispositif destiné à présenter une onomatopée relative aux résultats d'évaluation d'un environnement aux alentours comprend par ailleurs
un localisateur de position configuré pour localiser une position de l'objet;
dans lequel
le segment d'affichage d'image (502) est configuré pour afficher l'onomatopée sous forme de texte, à proximité d'une région de l'élément au niveau de laquelle l'élément est traversé par une ligne droite qui connecte le point de vue de l'opérateur et la position de l'objet localisée par le localisateur de position.

5. Dispositif de présentation d'une onomatopée relative à des résultats d'évaluation d'un environnement aux alentours selon l'une des revendications 1 à 2, dans lequel
l'utilisateur inclut un conducteur d'un véhicule (1), et
le dispositif de notification comporte un segment de sortie audio (501) prévu dans un casque (85) porté par le conducteur.

6. Dispositif de présentation d'une onomatopée relative à des résultats d'évaluation d'un environnement aux alentours selon la revendication 5, dans lequel
l'état de l'environnement aux alentours comporte un état d'un objet à proximité du véhicule (1); et
le dispositif destiné à présenter une onomatopée relative aux résultats d'évaluation d'un environnement aux alentours comprend par ailleurs
un localisateur de position configuré pour localiser une position de l'objet;
dans lequel
le segment de sortie audio (501) comporte un segment de sortie audio directionnel présentant une directivité, et
le segment de sortie audio directionnel est configuré pour sortir l'onomatopée dans un format audio de sorte que la position de l'objet qui est localisé par le localisateur de position soit perçue comme la source de son.

7. Procédé de présentation d'une onomatopée relative à des résultats d'évaluation d'un environnement aux alentours, comprenant:
une étape d'entrée d'informations de mesure (S1) consistant à entrer un résultat de mesure relatif à un état mesuré par un dispositif de mesure (101 à 109) en ce qui concerne un environnement aux alentours d'un utilisateur;
une étape de traitement d'image consistant à effectuer une procédure d'analyse d'image sur les données d'image pour obtenir ainsi un résultat d'analyse d'image;
une étape de sélection de données d'onomatopée (S8) consistant à réaliser une évaluation à plusieurs niveaux pour une pluralité d'éléments d'évaluation de l'environnement à l'aide de multiples critères de jugement sur base du résultat d'analyse d'image obtenu et du résultat de mesure et à sélectionner ensuite une onomatopée qui représente le résultat de l'évaluation à plusieurs niveaux, l'onomatopée couvrant un mot mimant la voix et un mot mimant l'état;
une étape d'obtention de données d'onomatopée (S9) consistant à obtenir les données d'onomatopée qui correspondent à l'onomatopée sélectionnée à l'étape de sélection de données d'onomatopée (S8);
une étape de sortie d'onomatopée (S10) qui sort les données d'onomatopée obtenues par l'étape d'obtention de données d'onomatopée vers un dispositif de notification à même de faire une notification à l'utilisateur sous forme audio ou texte, amenant ainsi le dispositif de notification à présenter une onomatopée qui correspond à l'évaluation de l'environnement aux alentours sous forme d'audio ou de texte tandis que l'utilisateur réalise une action dans l'environnement aux alentours.

8. Procédé de présentation d'une onomatopée relative à des résultats d'évaluation d'un environnement aux alentours selon la revendication 7, dans lequel
les données d'onomatopée obtenues par l'étape d'obtention de données d'onomatopée (S9) sont des données indiquant une onomatopée correspondant à une évaluation de l'environnement aux alentours obtenue par comparaison du résultat de mesure ou d'une valeur calculée sur base du résultat de mesure avec une valeur de seuil prédéterminée.
